# EUROPÄISCHE PATENTSCHRIFT

(11) **EP 4 045 702 B1**
(45) Veröffentlichungstag und Bekanntmachung des Hinweises auf die Patenterteilung: **09.12.2026**
(21) Anmeldenummer: 20796514.6
(22) Anmeldetag: 15.10.2020
(51) Int. Cl.: D01D 1/02, C08B 1/00, C08L 1/02, D01D 5/06, D01F 1/10, D01F 2/00, D01F 2/02

(54) **VERFAHREN ZUR HERSTELLUNG EINER CELLULOSISCHEN FUNKTIONSFASER MIT HOHER IONENAUSTAUSCHKAPAZITÄT, CELLULOSISCHE FUNKTIONSFASER, CELLULOSISCHE FUNKTIONSFASER UMFASSENDES TEXTILERZEUGNIS, SOWIE CELLULOSISCHE FUNKTIONSFASER ODER TEXTILERZEUGNIS UMFASSENDES KLEIDUNGSSTÜCK ODER MÖBELSTÜCK**
METHOD FOR PRODUCING A CELLULOSIC FUNCTIONAL FIBER WITH HIGH ION EXCHANGE CAPACITY, CELLULOSIC FUNCTIONAL FIBER, CELLULOSIC FUNCTIONAL FIBER COMPREHENSIVE TEXTILE PRODUCT, AND CELLULOSIC OR FUNCTIONAL FIBER FIBER
PROCÉDÉ DE PRODUCTION D'UNE FIBRE FONCTIONNELLE CELLULOSIQUE À HAUTE CAPACITÉ D'ÉCHANGE D'IONS, FIBRE FONCTIONNELLE CELLULOSIQUE, PRODUIT TEXTILE COMPLET EN FIBRE FONCTIONNELLE CELLULOSIQUE ET FIBRE FIBRE CELLULOSIQUE OU FONCTIONNELLE

(30) Priorität: 15.10.2019 DE 102019007165; 15.04.2020 WO PCT/EP2020/060630
(43) Veröffentlichungstag der Anmeldung: 24.08.2022
(73) Patentinhaber: SMARTFIBER AG, 07407 Rudolstadt (DE)
(72) Erfinder: KOLBE, Axel, 07407 Rudolstadt (DE)
(74) Vertreter: Fritzsche, Thomas
(86) Internationale Anmeldenummer: PCT/EP2020/079089
(87) Internationale Veröffentlichungsnummer: WO 2021/074319

(56) Entgegenhaltungen:
- CN-A- 103 194 826
- CN-A- 108 065 459
- US-A1- 2017 051 435
- US-A1- 2018 023 216

## Beschreibung

Die Erfindung betrifft ein Verfahren zur Herstellung einer cellulosischen Funktionsfaser mit hoher Ionenaustauschkapazität, eine mittels dieses Verfahrens hergestellte cellulosische Funktionsfaser, ein diese cellulosische Funktionsfaser umfassendes Textilerzeugnis, und ein diese cellulosische Funktionsfaser oder/und dieses Textilerzeugnis umfassendes Kleidungsstück oder Möbelstück.

### Stand der Technik

Cellulosische Fasern können künstlich aus Zellstoff hergestellt werden. Technologisch können derartige cellulosische Fasern als Regeneratfasern hergestellt werden, zu deren wichtigsten Vertretern Viskose, Modal, Lyocell und Cupro zählen. Bei Lyocell handelt es sich um eine Cellulose-Regeneratfaser, welche nach dem sogenannten Lyocellprozess, einem Direktlöseverfahren mit N-Methylmorpholin-N-oxid Monohydrat (NMMO) als Lösungsmittel, hergestellt wird. Cellulosische Fasern, welche nach dem Lyocellprozess hergestellt werden, weisen ausgezeichnete physikalische Eigenschaften auf, die es ermöglichen, Fremdmaterialien in erheblichen Anteilen in eine textile Faser zu integrieren.

Bei diesen Fremdmaterialien kann es sich u.a. um weitere Polysaccharide handeln, wie beispielsweise um Cellulosederivate, Chitin, Xylan oder Stärke, wobei sich uronsäurehaltige Polysaccharide als besonders interessant erwiesen haben. Diese cellulosischen Fasern können u.a. in der Medizin, in der Wasseraufbereitung, und in Funktionsbekleidung verwendet werden. In Form von Monomeren und Oligomeren sind Uronsäuren als Material für textile Fasern völlig ungeeignet, da sie wasserlöslich sind.

DE 100 09 034 A1 offenbart ein Verfahren zur Herstellung von cellulosischen Formkörpern mit verringerter, gezielt einstellbarer Fibrillierung. Das Verfahren umfasst das Überführen einer Suspension aus Cellulose und wässrigem N-Methylmorpholin-N-oxid in eine Extrusionslösung, das Extrudieren der Extrusionlösung durch ein Formwerkzeug und durch einen Luftspalt in ein Fällbad, und das Waschen und Vernetzen des gefällten Formkörpers, wobei weiterhin ein oxidiertes Zweitpolysaccharid zum Einsatz gelangt und die Cellulose mit dem oxidierten Zweitpolysaccharid vernetzt wird. Als Zweitpolysaccharide können wasserlösliche Homopolysaccharide und Heteropolysaccharide eingesetzt werden, wobei Beispiele für Heteropolysaccharide u.a. Pektin und Algin umfassen.

WO 2001/062844 A1 beschreibt ein Verfahren zur Herstellung eines Formkörpers mit geringer Fibrillierungsneigung. Das Verfahren umfasst (a) das Mischen eines biologisch abbaubaren Polymers ausgewählt aus der Gruppe bestehend aus Cellulose, modifizierter Cellulose und Gemischen hiervon mit einem Material aus Meerespflanzen oder/und aus Schalen von Meerestieren, wobei das Material aus Meerespflanzen oder/und aus Schalen von Meerestieren in einer Menge von 0.1 bis 30 Gew.-%, bezogen auf das Gewicht des biologisch abbaubaren Polymers, vorliegt, (b) das Herstellen einer verformbaren Masse nach dem Lyocellprozess, (c) das Verarbeiten der in (b) erhaltenen Masse zu einem Formkörper, und (d) das Nachbehandeln des hergestellten Formkörpers. Das Material aus Meerespflanzen ist vorzugsweise ausgewählt aus der Gruppe bestehend aus Algen, Kelp und Seegras, wobei Beispiele für Algen Braunalgen, Grünalgen, Rotalgen, Blaualgen und Gemische hiervon beinhalten.

WO 2003/012182 A1 beschreibt ein Verfahren zur Herstellung von cellulosischen Formkörpern mit hohem Rückhaltevermögen für wässrige Flüssigkeiten. Das Verfahren umfasst das Herstellen und Extrudieren einer verformbaren Masse nach dem Lyocellprozess, wobei die verformbare Masse neben Cellulose ein superabsorbierendes Polymerisat enthält, welches durch Polymerisieren von (a) 55 bis 99,95 Gew.-% monoethylenisch ungesättigte Carboxylgruppen tragenden Monomeren, (b) 0.05 bis 5.0 Gew.-% wenigstens eines Vernetzungsmittels, (c) 0 bis 40 Gew.-% weiteren, mit (a) copolymerisierbaren Monomeren, und (d) 0 bis 30 Gew.-% einer wasserlöslichen Pfropfgrundlage erhalten wird. Bei der Pfropfgrundlage kann es sich u.a. um teil- oder vollverseifte Polyvinylalkohole, Polyacrylsäuren, Polyglykole und Polysaccharide handeln, wobei als konkretes Beispiel für Polysaccharide neben Cellulose, Cellulosederivaten, Stärke, Stärkederivaten und Xanthanen auch Alginate genannt sind.

CN 103 194 826 A offenbart ein Verfahren zur Herstellung eines biologisch abbaubaren Mischgarns mit antibakteriellen Eigenschaften, guter Feuchtigkeitsaufnahme und hoher Garnfestigkeit, welches u.a. zur Herstellung von Bekleidung verwendet werden kann. Das Verfahren umfasst das Öffnen und Reinigen, Kardieren, Vorgarnen, Verspinnen und Wickeln eines geeigneten Gemisches aus 10 bis 80 Gew.-% an Alginatfasern, 10 bis 80 Gew.-% an Seidenraupenproteinfasern und 10 bis 80 Gew.-% an Bambusfasern, wobei die Alginatfasern aus Natriumalginat gebildet werden, welches vorab durch Extraktion von Meeresalgen mit Wasser als Extraktionsmittel erhalten worden ist.

CN 108 065 459 A offenbart ein Verfahren zur Herstellung eines Gewebes mit guter Feuchtigkeitsaufnahme, welches zur Herstellung von Thermounterwäsche dient. Das Verfahren umfasst das Verspinnen eines Gemisches aus 40 bis 60 Gewichtsteilen an Baumwollfasern, 20 bis 40 Gewichtsteilen an Lyocell-Bambusfasern, 30 bis 40 Gewichtsteilen an Modalfasern, 25 bis 30 Gewichtsteilen an Elasthanfasern, 25 bis 45 Gewichtsteilen an Alginatfasern und 5 bis 15 Gewichtsteilen an Kaschmir, wobei die Alginatfasern aus Natriumalginat gebildet werden, welches vorab durch Extraktion von Meeresalgen mit Wasser als Extraktionsmittel erhalten worden ist.

Im Allgemeinen besitzen uronsäurehaltige Polymere auch ionenaustauschende Eigenschaften. Die Verwendung von ionenaustauschenden Naturstoffen für cellulosische Funktionsfasern im Rahmen eines Direktlöseverfahrens wie dem Lyocellprozess hat indessen verschiedene Nachteile, welche eine stabile Prozessführung erschweren. Insbesondere reichern sich lösliche Bestandteile, wie beispielsweise Mineralsalze und wasserlösliche organische Stoffe **(z.B.** Proteine, Kohlenhydrate, Lipide und Farbstoffe), in den im Kreislauf gefahrenen Betriebsmedien **(z.B.** in Lösungsmitteln wie **N-**Methylmorpholin-N-oxid) an. Diese unerwünschten Bestandteile führen zur Zersetzung des Lösungsmittels oder zu Verkrustungen bzw. Verschmutzungen im System, was einen geringeren Produktionsdurchsatz sowie erhöhte Produktionskosten infolge erforderlicher Reinigungsmaßnahmen zur Folge hat. Darüber hinaus können sich die unerwünschten Bestandteile ungünstig auf die Qualität der hergestellten cellulosischen Formkörper auswirken.

### Aufgabe der Erfindung

Die der Erfindung zugrundeliegende Aufgabe besteht somit darin, ein Verfahren zur Herstellung einer cellulosischen Funktionsfaser bereitzustellen, welches die vorstehend beschriebenen Nachteile weitestgehend vermeidet. Insbesondere sollte das Verfahren weder den Lösungsmittelkreislauf noch den Faserherstellungsprozess negativ beeinflussen, und sollte eine kostengünstige und effiziente Herstellung von cellulosischen Funktionsfasern mit hoher Ionenaustauschkapazität auf Basis eines natürlich vorkommenden Polymers ermöglichen.

### Zusammenfassung der Erfindung

Gelöst wird diese Aufgabe mittels der Gegenstände der in den Ansprüchen definierten Erfindung.

In einem ersten Aspekt betrifft die Erfindung somit ein Verfahren zur Herstellung einer cellulosischen Funktionsfaser, welches die Schritte umfasst:
Bereitstellen eines Pflanzenrohmaterials, welches polymergebundene Uronsäuren enthält;
Extrahieren des Pflanzenrohmaterials mit einem Extraktionsmittel, um auf diese Weise ein extrahiertes, polymergebundene Uronsäuren enthaltendes Pflanzenmaterial bereitzustellen;
Bereitstellen einer Spinnlösung, welche Cellulose und das extrahierte, polymergebundene Uronsäuren enthaltende Pflanzenmaterial umfasst; und
Verspinnen der Spinnlösung, wobei der Extraktionsschritt Anspruch 1 entspricht.

In einem zweiten Aspekt betrifft die Erfindung eine cellulosische Funktionsfaser, welche mittels des im ersten Aspekt beschriebenen Verfahrens hergestellt worden ist.

In einem dritten Aspekt betrifft die Erfindung ein Textilerzeugnis, welches die im zweiten Aspekt beschriebene cellulosische Funktionsfaser umfasst.

In einem vierten Aspekt betrifft die Erfindung ein Kleidungsstück oder ein Möbelstück, welches die im zweiten Aspekt beschriebene cellulosische Funktionsfaser oder/und das im dritten Aspekt beschriebene Textilerzeugnis umfasst. Genaue Beschreibung der Erfindung

Im Rahmen des erfindungsgemäßen Herstellungsverfahrens wird zunächst ein Pflanzenrohmaterial bereitgestellt, welches polymergebundene Uronsäuren enthält. Der Begriff "Pflanzenrohmaterial", wie er hierin verwendet wird, umfasst dabei sämtliche natürlich vorkommenden Pflanzen und Pflanzenteile terrestrischen oder marinen Ursprungs, welche polymergebundene Uronsäuren enthalten und damit bereits als solche eine signifikante Ionenaustauschkapazität für Kationen aufweisen sollten.

Bevorzugt ist das Pflanzenrohmaterial aus der Gruppe bestehend aus Früchten, Samen, Blättern, Wurzeln, Stängeln und Stämmen ausgewählt, und umfasst besonders bevorzugt pektinhaltige Pflanzenteile oder/und uronsäurehaltige Meerespflanzen. Beispiele für pektinhaltige Pflanzenteile beinhalten u.a. Citrusfrüchte sowie Fruchtstände von Sonnenblumen, Birnen, Äpfeln, Guaven, Quitten, Pflaumen und Stachelbeeren. Auch Rückstände aus der Saftherstellung (Trester) sind geeignet. Beispiele für uronsäurehaltige Meerespflanzen beinhalten insbesondere Meerespflanzen, welche aus uronsäurenhaltigen Polysacchariden aufgebaut sind, wie beispielsweise Algen, Kelp und Seegras. Stärker bevorzugt ist in diesem Zusammenhang die Verwendung von Algen, deren Beispiele **u.a.** Braunalgen, Grünalgen, Rotalgen, Blaualgen und Gemische hiervon umfassen. Braunalgen, und insbesondere Braunalgen der Gattungen *Ascophylum, Durvillea, Ecklonia, Fucus, Laminaria, Lessonia* und *Macrocystis,* gelten als besonders bevorzugt. Weiterhin ist es erfindungsgemäß besonders bevorzugt, dass es sich bei dem Pflanzenrohmaterial nicht um eine Minze oder ein Teil hiervon handelt, wobei konkrete Beispiele für Minzen **u.a.** Grüne Minze, Wasser-Minze, Acker-Minze und Pfefferminze umfassen.

Der Begriff "Ionenaustauschkapazität", wie er hierein verwendet wird, bezeichnet die Menge an Zinkionen in Mol, welche pro Gramm Faser gebunden werden kann. Die Definition für Zinkionen ergibt sich aus der Bestimmungsmethode. Qualitativ kann die Ionenaustauschkapazität auch auf andere Metallionen übertragen werden, so dass eine erhöhte Kapazität für Zinkionen beispielsweise auch eine erhöhte Kapazität für Magnesiumionen bedeutet, wenn auch nicht notwendigerweise in gleicher Höhe.

Im nächsten Schritt des erfindungsgemäßen Herstellungsverfahrens wird das ausgewählte Pflanzenrohmaterial mit einem Extraktionsmittel soweit extrahiert und gegebenenfalls nachbehandelt, dass wasserlösliche Bestandteile wie Mineralsalze, welche den Spinnprozess stören können, entfernt werden und lediglich die wasserunlöslichen Gerüststrukturen der Pflanze zurückbleiben. Durch die Entfernung von Mineralsalzen aus dem Pflanzenrohmaterial werden aktive Zentren für den Ionenaustausch deblockiert, womit die Ionenaustauschkapazität des Pflanzenmaterials weiter steigt. Die Aufbereitung des Pflanzenrohmaterials erfolgt mittels Fest-Flüssig-Extraktion, wobei das Extraktionsmittel bevorzugt Wasser, oder ein Gemisch aus Wasser und zumindest einem protischen organischen Lösungsmittel, und besonders bevorzugt um ein Gemisch aus Wasser und zumindest einem protischen organischen Lösungsmittel umfasst.

Als organische Lösungsmittel kommen insbesondere protische Lösungsmittel ausgewählt aus der Gruppe bestehend aus Alkoholen, Aminen, Amiden und Carbonsäuren, oder/und aprotisch-polare Lösungsmittel ausgewählt aus der Gruppe bestehend aus Ketonen, Lactonen, Lactamen, Nitrilen, Nitroverbindungen, tertiären Carbonsäureamiden, Sulfoxiden, Sulfonen und Kohlensäureestern in Betracht. Konkrete Beispiele für protische Lösungsmittel umfassen Methanol, Ethanol, Isopropanol, Ethanolamin, Ethylendiamin, Formamid, Ameisensäure, Essigsäure und Propionsäure, sind jedoch nicht auf diese beschränkt.

Sofern als Extraktionsmittel ein Gemisch aus Wasser und zumindest einem protischen organischen Lösungsmittel verwendet wird, so beträgt der Anteil an organischem Lösungsmittel bevorzugt 10 bis 80 Gew.-%, bezogen auf das Gesamtgewicht des Lösungsmittelgemisches. Die obere Grenze des Anteils an organischem Lösungsmittel wird naturgemäß durch vorhandene Mischungsgrenzen des organischen Lösungsmittels mit Wasser begrenzt. Stärker bevorzugt liegt der Anteil an organischem Lösungsmittel im Bereich von 20 bis 70 Gew.-%, und besonders bevorzugt im Bereich von 30 bis 60 Gew.-%, bezogen auf das Gesamtgewicht des Lösungsmittelgemisches.

Die Extraktion als solches kann kontinuierlich oder diskontinuierlich durchgeführt werden. Bei der diskontinuierlichen Extraktion wird in einem Temperaturbereich zwischen 0° und dem Siedepunkt des Lösungsmittels/Lösungsmittelgemisches gearbeitet. Hierzu kann das Pflanzenrohmaterial beispielsweise in eine Soxhlethülse eingebracht, und mittels einer einen Soxhletaufsatz umfassenden Apparatur unter Rückfluss des Lösungsmittels extrahiert werden. Auf diese Weise wird neben einem Extrakt ein extrahiertes, polymergebundene Uronsäuren enthaltendes Pflanzenmaterial erhalten, welches für die weitere Verarbeitung typischerweise getrocknet und gemahlen wird. Das mittels Extraktion erhaltene Pflanzenmaterial kann überraschenderweise sehr gut feinst vermahlen werden.

Der Begriff "extrahiertes, polymergebundene Uronsäuren enthaltendes Pflanzenmaterial", wie er hierein verwendet wird, bezeichnet somit den Extraktionsrückstand, welcher nach Extraktion des jeweiligen Pflanzenrohmaterials mit dem Extraktionsmittel erhalten wird und die im Extraktionsmittel unlöslichen Bestandteile des Pflanzenrohmaterials beinhaltet. Demgegenüber enthält der Extrakt definitionsgemäß jene Bestandteile des Pflanzenrohmaterials, welche sich im Extraktionsmittel unter den vorgegebenen Reaktionsbedingungen lösen, wie beispielsweise Mineralsalze und wasserlösliche Uronsäurederivate umfassend Alginsäure und Natriumalginat.

Im letzten Schritt des erfindungsgemäßen Herstellungsverfahrens wird das extrahierte, polymergebundene Uronsäuren enthaltende Pflanzenmaterial mit Cellulose unter Bereitstellung einer Spinnlösung kombiniert, und wird die Spinnlösung nach bekannten Methoden zu cellulosischen Funktionsfasern versponnen. Insbesondere sieht die vorliegende Erfindung eine Herstellung von cellulosischen Funktionsfasern nach dem Lyocellprozess vor, wobei das extrahierte, polymergebundene Uronsäuren enthaltende Pflanzenmaterial beispielsweise einer Cellulose und N-Methylmorpholin-N-oxid Monohydrat enthaltenden Spinnlösung zugesetzt wird, und die resultierende Spinnlösung anschließend unter geeigneten Bedingungen zu Filamenten, Fasern oder Folien versponnen wird. Dementsprechend ist es erfindungsgemäß besonders bevorzugt, dass die Spinnlösung weder den im Rahmen der Extraktion des Pflanzenrohmaterials als Nebenprodukt anfallenden Extrakt noch ein durch Aufarbeitung bzw. Reinigung des Extrakts erhaltenes Material enthält. Indem der Extrakt nicht weiter verwendet wird, kann der Faserherstellungsprozess vereinfacht werden, und können die Produktionskosten infolge einer Vergrößerung des Intervalls für Wartungsarbeiten und einer Erhöhung des Produktionsdurchsatzes merklich gesenkt werden.

Der Anteil an dem extrahierten, polymergebundene Uronsäuren enthaltenden Pflanzenmaterial in der zu verspinnenden Spinnlösung kann entsprechend den jeweiligen Anforderungen an das finale Textilerzeugnis vom Fachmann nach Bedarf eingestellt werden, beträgt jedoch bevorzugt 0.1 bis 15 Gew.-%, bezogen auf das Gewicht der in der Spinnlösung enthaltenen Cellulose. Stärker bevorzugt liegt der Anteil an dem extrahierten, polymergebundene Uronsäuren enthaltenden Pflanzenmaterial in der Spinnlösung im Bereich von 1.0 bis 10 Gew.-%, und besonders bevorzugt im Bereich von 2.5 bis 7.5 Gew.-%, bezogen auf das Gewicht der in der Spinnlösung enthaltenen Cellulose.

Sofern das der Spinnlösung zugesetzte Lösungsmittel (z.B. N-Methylmorpholin-N-oxid Monohydrat) recycelt wird, kann infolge der erfindungsgemäß durchgeführten Extraktion des Pflanzenrohmaterials mit einem geeigneten Extraktionsmittel eine Anreicherung von Mineralsalzen oder löslichen organischen Bestandteilen im System weitestgehend vermieden werden, womit reinigungsbedingte Wartungsarbeiten reduziert werden können und sich zudem der Produktionsdurchsatz erhöht. Ferner kann das Verfahren problemlos auf bestehenden Produktionsanlagen für Cellulosefasern angewendet werden.

Die mittels des erfindungsgemäßen Verfahrens hergestellten cellulosischen Funktionsfasern können vorteilhafterweise zur Erzeugung von Garnen, Zwirnen, Seilen, Geweben, Gewirken, Gestricken, Geflechten, Vliesstoffen, Filzen und anderen Textilerzeugnissen verwendet werden, wobei die Fasern ihre Funktionalität auf das gesamte Textilerzeugnis übertragen. Das Textilerzeugnis kann seinerseits in geeigneter Art und Weise weiterverarbeitet werden, und insbesondere zur Herstellung von Kleidungsstücken, Möbelstücken (speziell als Bezug) oder Teppichen dienen. Textilerzeugnisse, welche diese Fasern umfassen oder aus ihnen hergestellt sind, zeichnen sich durch einen ähnlich hohen Tragekomfort und bessere Ionenbindeeigenschaften auf als cellulosische Funktionsfasern, welche Anteile von unbehandelten Naturstoffen enthalten. Darüber hinaus besitzen die mittels des erfindungsgemäßen Verfahrens hergestellten cellulosischen Funktionsfasern auch ähnliche Eigenschaften wie herkömmlich nach dem Lyocellprozess hergestellte Fasern, und sie lassen sich auf die gleiche technologische Weise textil verarbeiten.

Diese Eigenschaften sind vermutlich darauf zurückzuführen, dass die erfindungsgemäß hergestellten cellulosischen Funktionsfasern polymergebundene, an Cellulose immobilisierte Uronsäuren wie α-L-Guluronsäure und β-D-Mannuronsäure enthalten, deren pKs-Werte erstaunlich gut mit dem pH-Wert der Haut harmonisieren, und die für den Ionenaustausch verantwortlichen aktiven Zentren der Uronsäuren durch die gezielte Abtrennung von Mineralsalzen leicht zugänglich sind, was typischerweise zu Ionenaustauschkapazitäten von zumindest 60 µmol/g führt. Bevorzugt beträgt die Ionenaustauschkapazität der erfindungsgemäß hergestellten cellulosischen Funktionsfasern zumindest 65 µmol/g, und besonders bevorzugt zumindest 70 µmol/g.

Überraschenderweise kann die Ionenaustauschkapazität der hierin beschriebenen cellulosischen Funktionsfasern zumindest vorübergehend, d.h. vorübergehend oder dauerhaft, weiter erhöht werden, indem entweder der Spinnlösung selbst, oder aber den nach Verspinnen der Spinnlösung erhaltenen cellulosischen Funktionsfasern gezielt ein Erdalkalimetallsalz oder Zinksalz mit einer Wasserlöslichkeit von zumindest 100 g/l bei 20°C, bevorzugt ein Magnesiumsalz, Calciumsalz oder Zinksalz mit einer Wasserlöslichkeit von zumindest 100 g/l bei 20°C, stärker bevorzugt ein Magnesiumsalz oder Calciumsalz mit einer Wasserlöslichkeit von zumindest 100 g/l bei 20°C, und besonders bevorzugt Calciumchlorid zugeführt wird.

Sofern der Spinnlösung direkt ein solches Erdalkalimetallsalz oder Zinksalz, bevorzugt ein solches Magnesiumsalz, Calciumsalz oder Zinksalz, stärker bevorzugt ein solches Magnesiumsalz oder Calciumsalz, und besonders bevorzugt Calciumchlorid zugegeben wird, erhöht sich die Ionenaustauschkapazität der cellulosischen Funktionsfasern merklich auf üblicherweise zumindest 75 µmol/g. Zu diesem Zweck kann die Spinnlösung beispielsweise weiterhin 0.5 bis 5 Gew.-% an Erdalkalimetallsalz oder Zinksalz, bevorzugt an Magnesiumsalz, Calciumsalz oder Zinksalz, stärker bevorzugt an Magnesiumsalz oder Calciumsalz, und besonders bevorzugt an Calciumchlorid, bezogen auf das Gewicht der in der Spinnlösung enthaltenen Cellulose, umfassen. Im Falle einer Verwendung eines Erdalkalimetallsalzes wie Calciumchlorid oder eines Zinksalzes liegt der Anteil an Salz in der Spinnlösung bevorzugt im Bereich von 1.0 bis 3.5 Gew.-%, und besonders bevorzugt im Bereich von 1.5 bis 3.0 Gew.-%, bezogen auf das Gewicht der in der Spinnlösung enthaltenen Cellulose. Durch Waschen einer auf diese Weise hergestellten cellulosischen Funktionsfaser mit haushaltsüblichem Waschpulver kann die Ionenaustauschakapzität der Faser sogar noch weiter gesteigert werden.

Alternativ kann die nach dem Verspinnen der Spinnlösung erhaltene cellulosische Funktionsfaser nachträglich mit einer wässrigen Lösung eines Erdalkalimetallsalzes oder Zinksalzes mit einer Wasserlöslichkeit von zumindest 100 g/l bei 20°C, bevorzugt einer wässrigen Lösung eines Magnesiumsalzes, Calciumsalzes oder Zinksalzes mit einer Wasserlöslichkeit von zumindest 100 g/l bei 20°C, stärker bevorzugt einer wässrigen Lösung eines Magnesiumsalzes oder Calciumsalzes mit einer Wasserlöslichkeit von zumindest 100 g/l bei 20°C, und besonders bevorzugt einer wässrigen Calciumchlorid-Lösung behandelt (z.B. getränkt) werden. Hierdurch erhöht sich die anfängliche Ionenaustauschkapazität der cellulosischen Funktionsfaser zunächst merklich auf üblicherweise zumindest 80 µmol/g. Allerdings verringert sich die Ionenaustauschkapazität einer solchen cellulosischen Funktionsfaser mit zunehmender Anzahl an Wäschen auf das Niveau einer unbehandelten additivierten Faser. Die Konzentration an Erdalkalimetallsalz oder Zinksalz, bevorzugt an Magnesiumsalz, Calciumsalz oder Zinksalz, stärker bevorzugt an Magnesiumsalz oder Calciumsalz, und besonders bevorzugt Calciumchlorid in der wässrigen Lösung kann vom Fachmann je nach Bedarf eingestellt werden, beträgt jedoch bevorzugt 2 bis 8 Gew.-%, und stärker bevorzugt 4 bis 6 Gew.%.

Nachfolgend wird die Erfindung anhand von Beispielen näher beschrieben. Sofern nicht anderweitig angegeben, wurden die in den Beispielen verwendeten Chemikalien jeweils von Sigma-Aldrich bezogen.

### Beispiele

### Beispiel 1

Ein Algenpulver aus getrockneten Braunalgen der Gattung *Laminaria* (Hersteller: smartfiber AG) wurde mittels Soxhlet extrahiert. Hierzu wurde 1 g des Algenpulvers in eine Soxhlethülse eingewogen und für 2 h unter Rückfluss extrahiert. Als Extraktionsmittel wurde zum einen Wasser (Reinstwasser), und zum anderen ein Wasser/Ethanol-Gemisch im Massenverhältnis 70:30 eingesetzt. Das nach Extraktion erhaltene Algenmaterial wurde jeweils getrocknet und anschließend mittels Elementaranalyse in Bezug auf ausgewählte chemische Elemente analysiert.

Die Bestimmung des Gehalts an Kohlenstoff (C), Wasserstoff (H), Stickstoff (N) und Schwefel (S) erfolgte hierbei jeweils nach Herstellerangaben auf einem Euro Elementaranalysator der HEKAtech GmbH.

Die Bestimmung des Gehalts an Chlor (Cl) und Iod (I) erfolgte für Chlor in Übereinstimmung mit bzw. für Iod in Anlehnung an DIN EN ISO 10304-1:2009-07 auf einem ICS-900 Ionenchromatographie-System von Thermo Fisher Scientific Inc.

Die Bestimmung des Gehalts an Natrium (Na), Kalium (K), Calcium (Ca), Magnesium (Mg) und Eisen (Fe) erfolgte jeweils in Übereinstimmung mit DIN EN ISO 11885:2009-09 auf einem iCAP^{™} 7400 ICP-OES Analysator von Thermo Fisher Scientific Inc.

Die Ergebnisse der Elementaranalysen sind in den Tabellen 1 und 2 dargestellt.

**Tabelle 1**

| | C | H | N | S | Cl | I |
|---|---|---|---|---|---|---|
| | [%] | | | | [mg/kg] | |
| Algenpulver, vor Extraktion | | | | | 19000 | <500 |
| Algenpulver, nach Extraktion mit H₂O | 37.60 | 4.80 | 1.37 | 2.05 | 6500 | <500 |
| Algenpulver, nach Extraktion mit H₂O/EtOH (70:30) | 36.04 | 4.43 | 1.35 | 2.35 | 1600 | <500 |

**Tabelle 2**

| | Na | K | Ca | Mg | Fe |
|---|---|---|---|---|---|
| Algenpulver, vor Extraktion | 23600 | 13200 | 54600 | 8540 | 892 |
| Algenpulver, nach Extraktion mit H₂O | 240 | 116 | 17 | 14 | <0.014 |
| Algenpulver, nach Extraktion mit H₂O/EtOH (70:30) | 320 | 118 | 9.3 | 22 | <0.014 |

### Beispiel 2

Es wird eine Suspension aus 6 Gew.-% Cellulose mit einem Cuoxam-DP von 615 (Hersteller: Domsjö Fabriker AB), 52.5 Gew.-% N-Methylmorpholin-N-oxid Monohydrat (NMMO) (Hersteller: OQEMA AG) und 41.5 Gew.-% Wasser hergestellt. Aus dieser Suspension wird durch Scherung und Wasserverdampfung bei einer Temperatur von 95°C und einem Druck von 70 mbar eine Lösung erzeugt, welche anschließend durch eine Faserspinndüse gepresst, durch einen Luftspalt in ein Fällbad gebracht, und sodann abgezogen wird. Danach erfolgt die Auswaschung des Lösungsmittels, Avivierung, Schneiden und Trocknung der erhaltenen cellulosischen Funktionsfaser (Faser 1: Lyocellfaser).

### Beispiel 3

Das in Beispiel 2 beschriebene Verfahren zur Herstellung einer cellulosischen Funktionsfaser nach dem Lyocellprozess wurde wiederholt, mit Ausnahme dessen, dass der Spinnlösung 5 Gew.-% (bezogen auf das Gewicht der in der Spinnlösung enthaltenen Cellulose) an dem in Beispiel 1 als Ausgangsmaterial verwendeten unbehandelten Algenpulver zugesetzt wurden. Nach dem Verspinnen und der Nachbehandlung wurde eine uronsäurehaltige cellulosische Funktionsfaser (Faser 2) erhalten.

### Beispiel 4

Das in Beispiel 2 beschriebene Verfahren zur Herstellung einer cellulosischen Funktionsfaser nach dem Lyocellprozess wurde wiederholt, mit Ausnahme dessen, dass der Spinnlösung 5 Gew.-% (bezogen auf das Gewicht der in der Spinnlösung enthaltenen Cellulose) an dem in Beispiel 1 erhaltenen, mit Wasser extrahierten Algenpulver zugesetzt wurden. Nach dem Verspinnen und Nachbehandlung wurde eine uronsäurehaltige cellulosische Funktionsfaser (Faser 3) erhalten.

### Beispiel 5

Das in Beispiel 2 beschriebene Verfahren zur Herstellung einer cellulosischen Funktionsfaser nach dem Lyocellprozess wurde wiederholt, mit Ausnahme dessen, dass der Spinnlösung 5 Gew.-% (bezogen auf das Gewicht der in der Spinnlösung enthaltenen Cellulose) an dem in Beispiel 1 erhaltenen, mit Wasser/Ethanol im Massenverhältnis 70:30 extrahierten Algenpulver zugesetzt wurden. Nach dem Verspinnen und Nachbehandlung wurde eine uronsäurehaltige cellulosische Funktionsfaser (Faser 4) erhalten.

Die in den Beispielen 2 bis 5 erzeugten cellulosischen Funktionsfasern wurden sodann in Bezug auf ihre Färbung, ihre textilphysikalischen Werte, ihr Wasserrückhaltevermögen, und ihre Ionenaustauschkapazität überprüft. Hierbei wurde festgestellt, dass sich die verschiedenen cellulosischen Funktionsfasern in ihrer Färbung nicht unterschieden.

Die Bestimmung der Faserfeinheit erfolgte in Übereinstimmung mit DIN EN ISO 1973:1995-12.

Die Bestimmung der Höchstzugkraft, des Variationskoeffizienten der Höchstzugkraft, der Dehnung bei maximaler Kraft, der Reißfestigkeit, des Variationskoeffizienten der Reißfestigkeit, der feinheitsbezogenen Schlingenreißkraft, sowie des A-Moduls erfolgte jeweils in Übereinstimmung mit DIN EN ISO 5079:1996-02 auf einer Z005 Universalprüfmaschine der ZwickRoell GmbH & Co. KG.

Die Bestimmung des Wasserrückhaltevermögens erfolgte in Übereinstimmung mit DIN 53814:1974-10.

Die Bestimmung der Ionenaustauschkapazität erfolgte an den gewaschenen und getrockneten Fasern, und unter Durchführung der nachfolgend näher beschriebenen Schritte 1 bis 4.

### Schritt 1: Entaschung

Zur Entfernung von Metallionen wurden etwa 5 g feingeschnittene Fasern in ca. 200 ml einer 0.1 bis 0.2 N Salzsäure mit einem Ultraturrax-Rührer aufgeschlagen und 2 Stunden mittels Magnetrührer gerührt. Danach wurde der Zellstoff über eine G2-Fritte abgesaugt, mit Wasser neutral gewaschen, und an der Luft getrocknet. Von diesen entaschten, lufttrockenen Fasern wurde der Trockengehalt bestimmt.

### Schritt 2: Umsetzung mit Zinkacetat

Zwecks Austausch von Wasserstoffionen gegen Zinkionen wurden 1 g entaschte Fasern (Einwaage mE) mit bekanntem Trockengehalt in einem Erlenmeyerkolben mit 50 ml 0.02 N Zinkacetatlösung versetzt und mit einem Stopfen verschlossen. Die Faserproben verblieben 24 Stunden in der Zinkacetat-Lösung und wurden mindestens 5 Stunden davon geschüttelt (Schütteltisch).

### Schritt 3: Titration

Um die Abnahme der Zinkionenkonzentration in der zugesetzten Zinkacetat-Lösung zu bestimmen, wurde der Faserbrei vor der Titration nochmals kräftig durchgeschüttelt und über eine trockene G3-Fritte abgesaugt. 25 ml des Filtrats wurden mit 5 ml NH₃/NH₄Cl-Pufferlösung (pH 10) versetzt und Indikatorverreibung (Eriochromschwarz T) bis zur rotvioletten Farbe der Lösung zugesetzt. Mit 0.01 N Komplexonlösung wurde bis zum Farbumschlag nach blau titriert (Verbrauch b). In einer separaten Probe wurden 25 ml der eingesetzten Zinkacetatlösung unter den gleichen Bedingungen mit 0.01 N Komplexonlösung titriert (Verbrauch a).

### Schritt 4: Berechnung der Ionenaustauschkapazität

Die Berechnung der Ionenaustauschkapazität der jeweiligen cellulosischen Funktionsfaser erfolgte in Übereinstimmung mit der nachfolgenden Formel: $Ionenaustauschkapazität \left[μmol/g\right] = \frac{40 \left(a-b\right)}{{m}_{E} \frac{TG}{100}}$ wobei m_{E} = Einwaage [g], TG = Trockengehalt [%], b = Komplexonverbrauch der Probelösung [ml], und a = Komplexonverbrauch der Zinkacetatlösung [ml].

Die Ergebnisse der Bestimmung der textilphysikalischen Werte, des Wasserrückhaltevermögens und der Ionenaustauschkapazität sind in Tabelle 3 angegeben.

**Tabelle 3**

| | Faser 1 | Faser 2 | Faser 3 | Faser 4 |
|---|---|---|---|---|
| Faserfeinheit, gravimetrisch (Mittelwert aus 10×50 Fasern) [dtex] | 1.67 | 1.76 | 1.70 | 1.72 |
| Höchstzugkraft (HZK) [cN] | 7.27 | 6.79 | 6.72 | 6.48 |
| Variationskoeffizient der Höchstzugkraft [%] | 17.3 | 12.7 | 15.0 | 13.6 |
| Dehnung bei maximaler Kraft [%] | 12.72 | 13.6 | 13.7 | 14.2 |
| Reißfestigkeit [cN/tex] | 43.5 | 38.4 | 39.8 | 37.7 |
| Variationskoeffizient der Reißfestigkeit [%] | 14.7 | 12.7 | 15.0 | 13.6 |
| feinheitsbezogene Schlingenreißkraft [cN/tex] | 11.2 | 11.4 | 11.1 | 12.8 |
| A-Modul 0.5-0.7% [cN/tex] | 887 | 899 | 913 | 795 |
| Wasserrückhaltevermögen [%] | 68.1 | 66.2 | 67.2 | 67.0 |
| Ionenaustauschkapazität [µmol/g] | 8 | 55 | 61 | 71 |

Wie aus Tabelle 3 ersichtlich ist, lagen die textilphysikalischen Parameter der cellulosischen Funktionsfasern, welchen polymergebundene Uronsäuren in Form von Algenpulver hinzugefügt worden waren, allesamt im üblichen Varianzbereich von Lyocellfasern. Was die Ionenaustauschkapazität betrifft, so zeigte sich, dass ein Zusatz von 5 Gew.-% an Algenpulver, bezogen auf das Gewicht der in der Spinnlösung enthaltenen Cellulose, bereits zu einer signifikanten Steigerung der Ionentauschkapazizät führt. Im Falle der Verwendung von unbehandeltem Algenpulver stieg die Ionenaustauschkapazität auf das 7-fache (siehe Faser 2), im Falle der Verwendung von Algenpulver nach Extraktion mit Wasser auf das 7.5-fache (siehe Faser 3), und im Falle der Verwendung von Algenpulver nach Extraktion mit dem Wasser/Ethanol-Gemisch auf das 9-fache (siehe Faser 4) des Werts der nicht mit Algenpulver versetzten Faser 1 an.

### Beispiel 6

Das in Beispiel 4 beschriebene Verfahren zur Herstellung einer cellulosischen Funktionsfaser nach dem Lyocellprozess wurde wiederholt, mit Ausnahme dessen, dass der Spinnlösung zusätzlich 1.8 Gew.-% (bezogen auf das Gewicht der in der Spinnlösung enthaltenen Cellulose) an Calciumchlorid zugesetzt wurden. Nach Verspinnen und Nachbehandlung wurde eine uronsäurehaltige cellulosische Funktionsfaser (Faser 5) erhalten. Die Ionenaustauschkapazität dieser Faser lag bei 78 µmol/g, und betrug somit etwa das 10-fache des Werts der nicht mit Algenpulver versetzten Faser 1.

### Beispiel 7

Die in den Beispielen 2 bis 6 erhaltenen cellulosischen Funktionsfasern wurden 25 haushaltsüblichen Wäschen mit Waschpulver unterzogen, und sodann erneut in Bezug auf ihre Ionenaustauschkapazität untersucht. Die Ergebnisse sind in Tabelle 4 dargestellt.

**Tabelle 4**

| | Ionenaustauschkapazität [µmol/g] | |
|---|---|---|
| Anzahl der Wäschen | 0 | 25 |
| Faser 1 (unbehandelt) | 8 | 1 |
| Faser 2 (unbehandelt) | 55 | 69 |
| Faser 3 (unbehandelt) | 61 | 77 |
| Faser 4 (unbehandelt) | 71 | 84 |
| Faser 5 (unbehandelt) | 78 | 84 |

Wie aus Tabelle 4 ersichtlich ist, verringert sich die Ionenaustauschkapazität einer herkömmlichen, nach dem Lyocellprozess hergestellten und uronsäurefreien cellulosischen Funktionsfaser nach mehrmaligem Waschen (siehe Faser 1). Demgegenüber weisen die mit Algenpulver versetzten cellulosischen Funktionsfasern nach 25 haushaltsüblichen Wäschen jeweils eine höhere Ionenaustauschkapazität auf als die entsprechenden ungewaschenen Fasern (siehe Fasern 2 bis 5). Dies ist vermutlich auf einen zunehmende Fibrillierung der Fasern zurückzuführen, wodurch weitere aktive Zentren für die Ionenbindung zugänglich werden.

### Beispiel 8

Die in den Beispielen 3 bis 5 erhaltenen cellulosischen Funktionsfasern wurden jeweils mit einer 5 Gew.-% wässrigen Calciumchloridlösung behandelt (getränkt) und anschließend getrocknet. Die hierbei erhaltenen Fasern wurden sodann, vor und nach 25 haushaltsüblichen Wäschen mit Waschpulver, in Bezug auf ihre Ionenaustauschkapazität untersucht. Die Ergebnisse sind in Tabelle 5 dargestellt.

**Tabelle 5**

| | Ionenaustauschkapazität [µmol/g] | |
|---|---|---|
| Anzahl der Wäschen | 0 | 25 |
| Faser 2 (getränkt mit CaCl₂) | 74 | 62 |
| Faser 3 (getränkt mit CaCl₂) | 82 | 77 |
| Faser 4 (getränkt mit CaCl₂) | 95 | 81 |

Wie aus Tabelle 5 ersichtlich ist, wird im Falle einer Tränkung der cellulosischen Funktionsfasern mit CaCl₂ eine sofortige Steigerung der Ionenaustauschkapazität gegenüber nicht nachbehandelten Fasern beobachtet. Dieser Effekt der Nachbehandlung ist jedoch nach 25 Wäschen mit Waschmittel nicht mehr signifikant.

## Patentansprüche

1. Verfahren zur Herstellung einer cellulosischen Funktionsfaser, umfassend die Schritte:
Bereitstellen eines Pflanzenrohmaterials, welches polymergebundene Uronsäuren enthält;
Extrahieren des Pflanzenrohmaterials in einer fest-Flüssig Extraktion mit einem Extraktionsmittel, um auf diese Weise einen Extraktionsrückstand eines extrahierten, polymergebundenen Uronsäuren enthaltenden Pflanzenmaterial bereitzustellen;
Bereitstellen einer Spinnlösung, welche Cellulose und das extrahierte, polymergebundene Uronsäuren enthaltende Pflanzenmaterial umfasst; und
Verspinnen der Spinnlösung,
**dadurch gekennzeichnet, dass** die Extraktion mit einem protischen Extraktionsmittel durchgeführt wird, das Wasser oder ein Gemisch aus Wasser und einem protischen organischen Lösungsmittel umfasst, um einen Extraktionsrückstand zu erzeugen, der aus unlöslichen Bestandteile des Pflanzenmaterials besteht, deren Ionenaustauschfunktionen beblockiert sind.

2. Verfahren zur Herstellung einer cellulosischen Funktionsfaser gemäß Anspruch 1 oder 2, **dadurch gekennzeichnet, dass** das Pflanzenrohmaterial aus der Gruppe bestehend aus Früchten, Samen, Blättern, Wurzeln, Stängeln und Stämmen ausgewählt ist.

3. Verfahren zur Herstellung einer cellulosischen Funktionsfaser gemäß Anspruch 1 oder 2, **dadurch gekennzeichnet, dass** das Pflanzenrohmaterial aus Meerespflanzen stammt, welche aus polymergebundene Uronsäuren aufgebaut sind.

4. Verfahren zur Herstellung einer cellulosischen Funktionsfaser gemäß einem der vorhergehenden Ansprüche, **dadurch gekennzeichnet, dass** das organische Lösungsmittel ein protisches Lösungsmittel ausgewählt aus der Gruppe bestehend aus Alkoholen, Aminen, Amiden und Carbonsäuren, oder/und ein aprotischpolares Lösungsmittel ausgewählt aus der Gruppe bestehend aus Ketonen, Lactonen, Lactamen, Nitrilen, Nitroverbindungen, tertiären Carbonsäureamiden, Sulfoxiden, Sulfonen und Kohlensäureestern umfasst.

5. Verfahren zur Herstellung einer cellulosischen Funktionsfaser gemäß einem der Ansprüche 1 bis 4, **dadurch gekennzeichnet, dass** der Anteil an dem extrahierten, polymergebundene Uronsäuren enthaltenden Pflanzenmaterial in der Spinnlösung 0.1 bis 15 Gew.-%, bezogen auf das Gewicht der in der Spinnlösung enthaltenen Cellulose, betragt.

6. Verfahren zur Herstellung einer cellulosischen Funktionsfaser gemäß einem der Anspruche 1 bis 5, **dadurch gekennzeichnet, dass** die cellulosische Funktionsfaser in Übereinstimmung mit dem Lyocellprozess hergestellt wird.

7. Verfahren zur Herstellung einer cellulosischen Funktionsfaser gemäß einem der Anspruche 1 bis 6, **dadurch gekennzeichnet, dass** die Spinnlösung weiterhin 0.5 bis 5 Gew.-% an einem Erdalkalimetallsalz oder Zinksalz mit einer Wasserlöslichkeit von zumindest 100 g/l bei 20°C, bezogen auf das Gewicht der in der Spinnlösung enthaltenen Cellulose, umfasst.

8. Verfahren zur Herstellung einer cellulosischen Funktionsfaser gemäß einem der Ansprüche 1 bis 7, **dadurch gekennzeichnet, dass** das Verfahren weiterhin das Behandeln der durch Verspinnen der Spinnlösung erhaltenen cellulosischen Funktionsfaser mit einer 2 bis 8%-igen wässrigen Lösung eines Erdalkalimetallsalzes oder Zinksalzes mit einer Wasserlöslichkeit von zumindest 100 g/l bei 20°C umfasst.

9. Verfahren zur Herstellung einer cellulosischen Funktionsfaser gemäß Anspruch 7 oder 8, **dadurch gekennzeichnet, dass** es sich bei dem Erdalkalimetallsalz oder Zinksalz mit einer Wasserlöslichkeit von zumindest 100 g/l bei 20°C um Calciumchlorid handelt.

10. Cellulosische Funktionsfaser, hergestellt mittels des Verfahrens gemäß einem der Ansprüche 1 bis 9.

11. Textilerzeugnis, umfassend die cellulosische Funktionsfaser gemäß Anspruch 10.

12. Textilerzeugnis gemäß Anspruch 11, wobei es sich bei dem Textilerzeugnis um ein Garn, ein Zwirn, ein Seil, ein Gewebe, ein Gewirk, ein Gestrick, ein Geflecht, einen Vliesstoff oder ein Filz handelt.

13. Kleidungsstück, umfassend die cellulosische Funktionsfaser gemäß Anspruch 10 oder/und das Textilerzeugnis gemäß Anspruch 11 oder 12.

14. Möbelstück, umfassend die cellulosische Funktionsfaser gemäß Anspruch 10 oder/und das Textilerzeugnis gemäß Anspruch 11 oder 12.

## Claims

1. A method for producing a cellulosic functional fiber, comprising the steps:
providing a plant raw material containing polymer-bound uronic acids;
extracting the plant raw material in a solid-liquid extraction with an extraction agent in order to provide an extraction residue of extracted, polymer-bound uronic acid-containing plant material;
providing a spinning solution comprising cellulose and the extracted, polymer-bound plant material containing uronic acids; and
spinning the spinning solution,
**characterized in that** the extraction is carried out with a protic extraction agent comprising water or a mixture of water and a protic organic solvent to produce an extraction residue consisting of insoluble components of the plant material whose ion exchange functions are blocked.

2. The method for producing a cellulosic functional fiber according to claim 1 or 2, **characterized in that** the plant raw material is selected from the group consisting of fruits, seeds, leaves, roots, stems, and trunks.

3. The method for producing a cellulosic functional fiber according to claim 1 or 2, **characterized in that** the plant raw material is derived from marine plants which are composed of polymer-bound uronic acids.

4. The method for producing a cellulosic functional fiber according to any one of the preceding claims, **characterized in that** the organic solvent comprises a protic solvent selected from the group consisting of alcohols, amines, amides and carboxylic acids, and/or an aprotic-polar solvent selected from the group consisting of ketones, lactones, lactams, nitriles, nitro compounds, tertiary carboxylic acid amides, sulfoxides, sulfones, and carbonic acid esters.

5. The method for producing a cellulosic functional fiber according to any one of claims 1 to 4, **characterized in that** the proportion of the extracted plant material containing polymer-bound uronic acids in the spinning solution is 0.1 to 15 wt.%, based on the weight of the cellulose contained in the spinning solution.

6. The method for producing a cellulosic functional fiber according to any one of claims 1 to 5, **characterized in that** the cellulosic functional fiber is produced in accordance with the lyocell process.

7. The method for producing a cellulosic functional fiber according to any one of claims 1 to 6, **characterized in that** the spinning solution further comprises 0.5 to 5 wt.% of an alkaline earth metal salt or zinc salt having a water solubility of at least 100 g/l at 20°C, based on the weight of the cellulose contained in the spinning solution.

8. The method for producing a cellulosic functional fiber according to any one of claims 1 to 7, **characterized in that** the method further comprises treating the cellulosic functional fiber obtained by spinning the spinning solution with a 2 to 8% aqueous solution of an alkaline earth metal salt or zinc salt having a water solubility of at least 100 g/l at 20°C.

9. The method for producing a cellulosic functional fiber according to claim 7 or 8, **characterized in that** the alkaline earth metal salt or zinc salt having a water solubility of at least 100 g/l at 20°C is calcium chloride.

10. A cellulosic functional fiber produced by means of the method according to any one of claims 1 to 9.

11. A textile product, comprising the cellulosic functional fiber according to claim 10.

12. The textile product according to claim 11, wherein the textile product is a yarn, a thread, a rope, a woven fabric, a knitted fabric, a braid, a nonwoven fabric, or a felt.

13. A garment, comprising the cellulosic functional fiber according to claim 10 and/or the textile product according to claim 11 or 12.

14. A piece of furniture, comprising the cellulosic functional fiber according to claim 10 and/or the textile product according to claim 11 or 12.

## Revendications

1. Procédé de production d'une fibre fonctionnelle cellulosique, comprenant les étapes consistant à :
fournir une matière première végétale contenant des acides uroniques liés à des polymères ;
extraire la matière première végétale par une extraction solide-liquide avec un agent d'extraction, de manière à fournir de cette manière un résidu d'extraction d'une matière végétale extraite contenant des acides uroniques liés à des polymères ;
fournir une solution de filage comprenant de la cellulose et la matière végétale extraite contenant des acides uroniques liés à des polymères ; et
filer la solution de filage,
**caractérisé en ce que** l'extraction est réalisée à l'aide d'un agent d'extraction protique comprenant de l'eau ou un mélange d'eau et d'un solvant organique protique, afin de produire un résidu d'extraction constitué des constituants insolubles de la matière végétale, dont les fonctions d'échange d'ions sont bloquées.

2. Procédé de production d'une fibre fonctionnelle cellulosique selon la revendication 1 ou 2, **caractérisé en ce que** la matière première végétale est choisie dans le groupe constitué de fruits, de graines, de feuilles, de racines, de tiges et de troncs.

3. Procédé de production d'une fibre fonctionnelle cellulosique selon la revendication 1 ou 2, **caractérisé en ce que** la matière première végétale provient de plantes marines qui sont constituées d'acides uroniques liés à des polymères.

4. Procédé de production d'une fibre fonctionnelle cellulosique selon l'une quelconque des revendications précédentes, **caractérisé en ce que** le solvant organique comprend un solvant protique choisi dans le groupe constitué d'alcools, d'amines, d'amides et d'acides carboxyliques, et/ou un solvant aprotique polaire choisi dans le groupe constitué de cétones, de lactones, de lactames, de nitriles, de composés nitrés, d'amides d'acides carboxyliques tertiaires, de sulfoxydes, de sulfones et d'esters de l'acide carbonique.

5. Procédé de production d'une fibre fonctionnelle cellulosique selon l'une quelconque des revendications 1 à 4, **caractérisé en ce que** la proportion de matière végétale extraite contenant des acides uroniques liés à des polymères dans la solution de filage est de 0,1 à 15 % en poids, rapportée au poids de la cellulose contenue dans la solution de filage.

6. Procédé de production d'une fibre fonctionnelle cellulosique selon l'une quelconque des revendications 1 à 5, **caractérisé en ce que** la fibre fonctionnelle cellulosique est produite conformément au procédé Lyocell.

7. Procédé de production d'une fibre fonctionnelle cellulosique selon l'une quelconque des revendications 1 à 6, **caractérisé en ce que** la solution de filage comprend en outre de 0,5 à 5 % en poids d'un sel de métal alcalino-terreux ou d'un sel de zinc présentant une solubilité dans l'eau d'au moins 100 g/l à 20 °C, rapportés au poids de la cellulose contenue dans la solution de filage.

8. Procédé de production d'une fibre fonctionnelle cellulosique selon l'une quelconque des revendications 1 à 7, **caractérisé en ce que** le procédé comprend en outre le traitement de la fibre fonctionnelle cellulosique obtenue par filage de la solution de filage avec une solution aqueuse à 2 à 8 % d'un sel de métal alcalino-terreux ou d'un sel de zinc présentant une solubilité dans l'eau d'au moins 100 g/l à 20 °C.

9. Procédé de production d'une fibre fonctionnelle cellulosique selon la revendication 7 ou 8, **caractérisé en ce que** le sel de métal alcalino-terreux ou le sel de zinc présentant une solubilité dans l'eau d'au moins 100 g/l à 20 °C est du chlorure de calcium.

10. Fibre fonctionnelle cellulosique, produite au moyen du procédé selon l'une quelconque des revendications 1 à 9.

11. Produit textile comprenant la fibre fonctionnelle cellulosique selon la revendication 10.

12. Produit textile selon la revendication 11, dans lequel le produit textile est un fil, un fil retors, une corde, un tissu, un tricot, une étoffe tricotée, une étoffe tressée, un non-tissé ou un feutre.

13. Vêtement comprenant la fibre fonctionnelle cellulosique selon la revendication 10 et/ou le produit textile selon la revendication 11 ou 12.

14. Meuble comprenant la fibre fonctionnelle cellulosique selon la revendication 10 et/ou le produit textile selon la revendication 11 ou 12.
